# FASCICULE DE BREVET EUROPEEN

(11) **EP 0 959 725 B1**
(45) Date de publication et mention de la délivrance du brevet: **27.03.2002**
(21) Numéro de dépôt: 97906052.2
(22) Date de dépôt: 05.03.1997
(51) Int. Cl.: A47B 73/00

(54) **DISPOSITIF DE BLOCAGE POUR BOUTEILLES ET SON UTILISATION**
Vorrichtung zum Befestigen von Flaschen und ihre Verwendung
BOTTLE CLAMPING DEVICE AND USE THEREOF

(30) Priorité: 07.03.1996 BE 9600202
(43) Date de publication de la demande: 01.12.1999
(73) Titulaire: Blanco Camblor, José Antonio, 4020 Jupille (BE)
(72) Inventeur: Blanco Camblor, José Antonio, 4020 Jupille (BE)
(74) Mandataire: Powis de Tenbossche, Roland
(86) Numéro de dépôt international: BE9700030
(87) Numéro de publication internationale: WO9732506

(56) Documents cités:
- CH-A- 597 796
- FR-A- 2 327 743
- GB-A- 2 229 352

## Description

La présente invention a pour objet un dispositif permettant de maintenir une bouteille, en particulier une bouteille de vin. Par bouteilles dans le présent mémoire, on entend tout récipient ou flacon présentant un goulot.

Des supports pour bouteilles de vin sont connus. Ces supports présentent une ouverture dans laquelle vient se loger le goulot d'une bouteille et un bras destiné à supporter une partie de la bouteille adjacente de son fond.

Ces supports présentent l'inconvénient d'un encombrement important, d'exiger des manipulations difficiles pour retirer une bouteille, de ne pas permettre une sécurité optimale pour les bouteilles. etc.

Un dispositif selon le preambule de la revendication indépendante est connu du FR-A-2 327 743.

Le dispositif de blocage pour une bouteille selon l'invention est specifié dans la revendication indépendante.

De préférence, la pièce mobile est une pièce articulée par rapport à un support présentant l'ouverture dans laquelle le goulot d'une bouteille est engagé.

Selon une particularité, le dispositif comporte un support présentant au moins une ouverture, ce support étant agencé de manière à ce que la bouteille dont le goulot est engagé dans l'ouverture présente un axe sensiblement horizontal, de préférence formant un angle de 1 à 15° avec un plan horizontal, ledit angle étant tel que le point de croisement dudit axe avec le fond de la bouteille se trouve à un niveau inférieur au niveau de l'axe s'étendant dans le goulot. De préférence, l'angle que forme ledit axe avec un plan horizontal est compris entre 4 et 10° (en particulier de 5 à 6°).

Selon une forme de réalisation, la pièce mobile ou articulée est agencée pour prendre appui sur une face tournée vers le bas du goulot. De préférence, l'ouverture est définie entre une ou des parois du support, ladite ouverture étant agencée de manière à ce qu'au moins la face tournée vers le haut du goulot prenne appui sur une paroi définisant l'ouverture.

En particulier, l'ouverture est agencée de manière à ce qu'une partie du goulot adjacente du collet de celui-ci, mais tournée vers le fond de la bouteille, prenne appui sur une paroi définissant l'ouverture.

Selon une forme de réalisation particulière, l'ouverture est sensiblement cylindrique, toutefois cette ouverture est de préférence tronconique et présente un axe, ladite ouverture s'étendant entre deux extrémités, la surface de passage de l'ouverture perpendiculaire à son axe à son extrémité adjacente du collet du goulot introduit dans l'ouverture étant inférieure à la surface de passage de l'ouverture perpendiculaire à son axe à son autre extrémité. Selon cette forme de réalisation préférentielle, l'axe de l'ouverture est inclinée par rapport à un plan horizontal.

Selon une autre forme de réalisation, la pièce mobile ou articulée présente deux parties, une première étant agencée pour servir d'appui pur une partie du goulot tournée vers le fond de la bouteille, tandis que la deuxième partie est agencée pour appuyer sur une partie de la face du goulot tournée vers le bas qui est adjacente du collet. Dans cette forme de réalisation, la deuxième partie a de préférence une extrémité agencée pour appuyer sur une partie du collet. En particulier, la pièce est une pièce articulée par rapport à un axe sensiblement horizontal, la première partie se trouvant à une distance de l'axe supérieure à celle séparant la deuxième partie dudit axe.

Selon un détail d'une forme de réalisation avantageuse, un moyen agit sur la pièce mobile ou articulée pour exercer sur celle-ci un effort tendant à la pousser sur une partie de la face du goulot tournée vers le bas, ladite partie étant de préférence adjacente du collet. Un tel moyen est par exemple une lame ressort, en particulier portée par la pièce mobile ou articulée.

Selon un autre détail d'une forme de réalisation, le dispositif comporte un moyen pour maintenir la pièce mobile ou articulée dans une position pour laquelle ladite pièce n'exerce plus d'effort sur le goulot, de préférence pour laquelle ledit moyen s'oppose à l'effort exercé par la lame ressort.

A titre d'exemple, le dispositif se présente sous la forme d'un corps cylindrique creux destiné à être logé dans un trou que présente un support. Avantageusement, ce corps présente un rebord destiné à prendre appui sur une face du support, ainsi que des moyens destinés à coopérer avec un anneau destiné à prendre appui sur la face du support opposée à la face sur laquelle prend appui le rebord. Selon une caractéristique de cet exemple, le corps présente une ou des pattes flexibles munies d'un doigt de retenue destiné à prendre appui sur une paroi du trou lors de l'engagement du corps dans ledit trou pour créer une flexion de ladite ou desdites pattes vers le creux du corps.

Selon une autre forme de réalisation, le dispositif comporte un clapet mobile sur lequel agit un moyen de rappel pour obturer l'ouverture lorsque le goulot d'une bouteille est retiré.

Le dispositif suivant l'invention peut également comporter un système de verrouillage permettant de bloquer la pièce mobile ou articulée.

L'invention a également pour objet un support muni d'un ou de plusieurs dispositifs suivant l'invention.

En particulier, le support comporte plusieurs dispositifs, lesdits dispositifs étant agencés les uns par rapport aux autres pour que les bouteilles bloquées par ceux-ci soient distantes les une des autres. De préférence, les dispositifs sont agencés les uns par rapport aux autres pour que les bouteilles bloquées par ceux-ci puissent être retirées une à une sans toucher une autre bouteille.

Par exemple, le support comporte une plaque verticale ou destinée à être montée verticalement dans une structure ou sur un mur, la face de la plaque tournée vers la structure ou vers le mur étant avantageusement munie de collecteurs pour récupérer tout fluide sortant des bouteilles et pour éviter que le fluide sortant d'une bouteille puisse couler sur le goulot d'une autre bouteille.

L'invention a encore pour objet une armoire comportant un support suivant l'invention.

Selon une forme de réalisation de l'armoire, une chambre destinée à recevoir les collets des bouteilles bloquées par les dispositifs ou les extrémités lbres des goulots des bouteilles bloqués par les dispositifs y est définie.

Dans cette forme de réalisation, les dispositifs comportent de préférence chacun un clapet mobile sur lequel agit un moyen de rappel pour obturer l'ouverture lorsque le goulot d'une bouteille est retiré, tandis que l'armoire comporte un moyen pour contrôler l'atmosphère, en particulier l'humidité, de la chambre. Selon un détail d'une armoire, elle comporte un système de verrouillage des dispositifs empêchant le retrait d'une bouteille.

Selon un autre détail d'une armoire, chaque dispositif de blocage est associé à un système electrique destiné à envoyer un signal vers un dispositif de contrôle.

Des particularités et détails de l'invention ressortiront de la description détaillée suivante dans laquelle il est fait référence aux dessins ci-annexés relative à une forme de réalisation donnée à titre d'exemple uniquement.

Dans ces dessins,
- la figure 1 est une vue en perspective éclatée d'un dispositif suivant l'invention,
- la figure 2 est une vue du dispositif assemblé et monté sur une plaque,

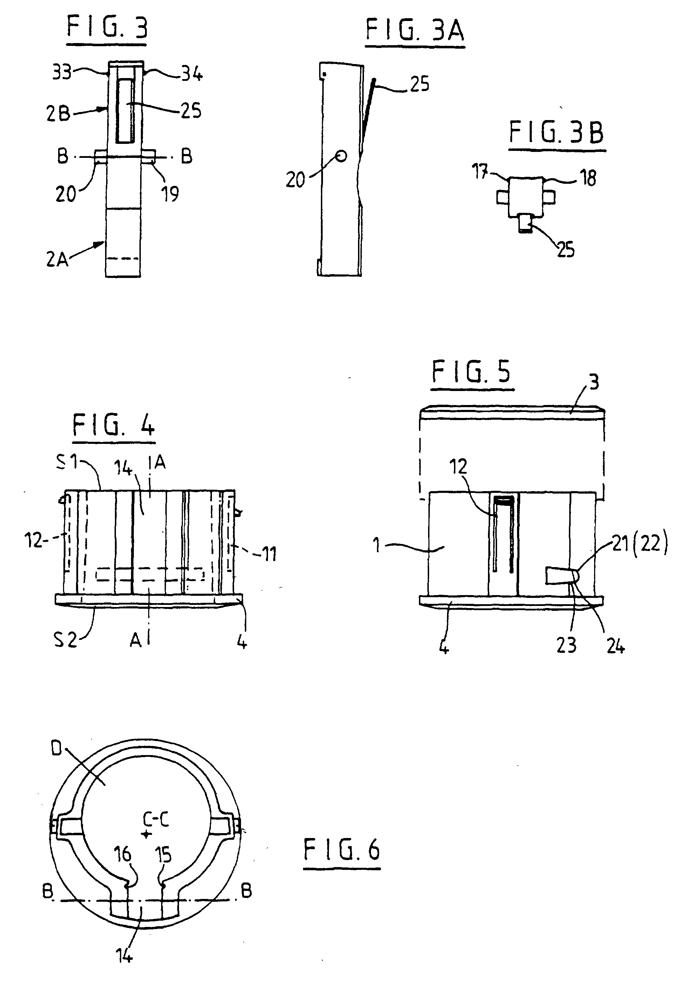

- la figure 3 est une vue de dessous de la pièce articulée,
- les figures 4 à 6 sont des vues de côté et avant du corps du dispositif, et

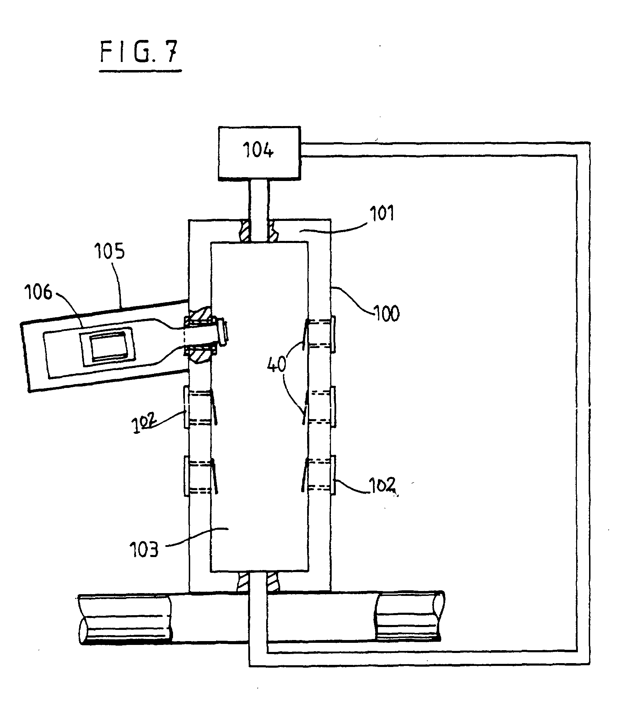

- la figure 7 est une vue schématique d'une armoire suivant l'invention.

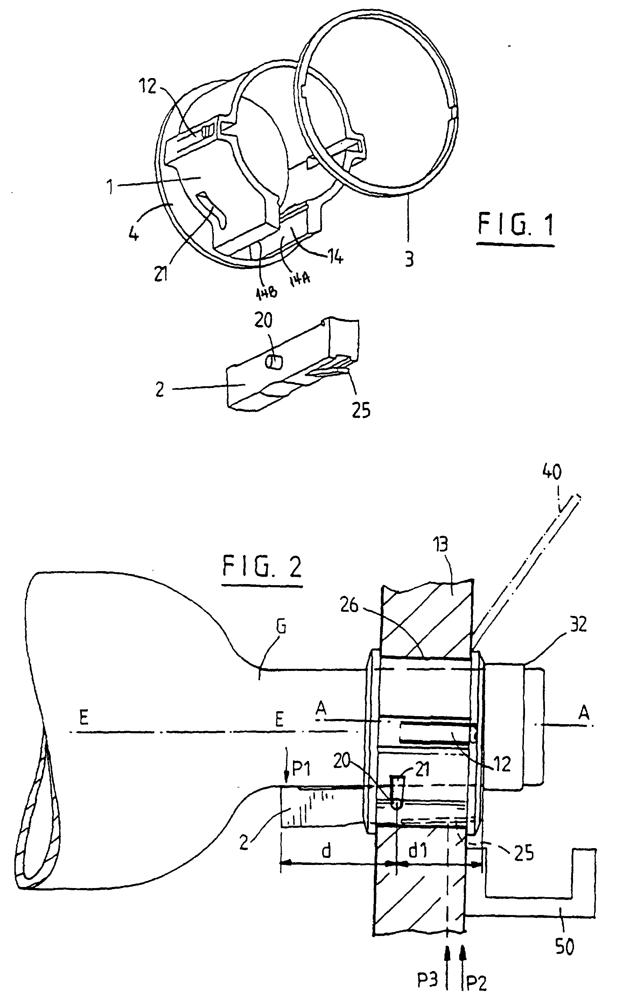

La figure 1 montre en perspective éclatée un dispositif de blocage pour bouteille suivant l'invention.

Le dispositif comporte un corps creux 1 présentant une rainure 14 dans laquelle un levier 2 est destiné à être logé. Un anneau 4 sert de moyen de fixation du corps 1 dans un trou percé dans l'épaisseur d'une plaque support 13. Les parois latérales 14A et 14B de la rainure présentent des gorges de clipsage 21,22 destinées a recevoir chacune un bout d'arbre ou ergot 19,20 solidaire du levier 2. Les gorges forment chacune un canal se rétrécisant pour former un passage minimum entre deux extrémités 23,24 débouchant dans une cavité dont la forme épouse sensiblement la forme d'un bout d'arbre.

Les bouts d'arbre 19,20 qui sont simplement fixés dans les cavités des gorges par pression définissent un axe de rotation B-B pour le levier 2, cet axe B-B étant sensiblement perpendiculaire à l'axe A-A du creux défini dans le corps 1.

Une lame flexible 25 est portée par le levier 2. Cette lame 25 assure un pivotement du levier 2 et s'oppose à des mouvements du levier par exemple dûs à des chocs non désirés.

Le corps 1 a une forme extérieure sensiblement cylindrique (axe C-C). Cet axe C-C est décalé par rapport à l'axe A-A du creux du corps. Un tel décalage est avantageux pour une utilisation optimale (moindre utilisation de matière) de la matière.

Le levier est muni de surépaisseurs ou bourrelets 17,18 destinés à coopérer avec des logements 15,16 que présentent les parois 14A et 14B de la rainure. Ces bourrelets constitue un moyen pour maintenir le levier dans une position pour laquelle ladite pièce n'exerce plus d'effort sur le goulot, de préférence pour laquelle ledit moyen s'oppose à l'effort exercé par la lame ressort 25.

Pour assurer une fixation adéquate du corps 1 sur la plaque 13, un anneau 3 est clipsé sur l'extrémité arrière du corps 1. Cet anneau est destiné à coopérer avec un ou des doigts que portent deux lames flexibles de longueur différente. Ces lames 11,12 sont montées sur les parois extérieures du corps 1. Lors de l'engagement du corps 1 dans le trou de la plaque 13, les doigts touchent les parois du trou provoquant un pivotement des lames 11,12 vers le creux du corps. Dès que les doigts ne prennent plus appui sur les parois du trou, les lames reprennent leur état normal. Les doigts que présentent les lames servent alors de moyens d'attache pour l'anneau 3. Les lames 11,12 ont des longueurs différentes de manière à permettre la fixation de l'anneau 3 pour des épaisseurs différentes de la plaque.

Le corps 1 comprend sur sa face tournée vers l'extérieur un rebord ou collerette d'arrêt 4, ce rebord étant destiné à prendre appui sur la face extérieure de la plaque 13.

Le corps 1 présente un creux D livrant passage à une partie du goulot G de la bouteille. Le levier 2 est destinée à prendre appui au moins partiellement sur le goulot de la bouteille.

La plaque 13 est sensiblement verticale. Le creux D du corps est agencé de manière à ce que la bouteille dont le goulot G est engagé dans le creux D présente un axe E-E sensiblement horizontal. Cet axe E-E forme un angle de 4 à 6° avec un plan horizontal, ledit angle étant tel que le point de croisement dudit axe avec le fond de la bouteille se trouve à un niveau inférieur au niveau de l'axe s'étendant dans le goulot G.

Le levier 2 présente une partie 26 pour prendre appui sur une face tournée vers le bas du goulot, tandis que la paroi définissant le creux du corps 1 est agencée de manière à ce qu'au moins la face tournée vers le haut du goulot prenne appui sur ladite paroi.

En fait, la paroi du creux et le levier 2 sont agencés pour qu'en position bloquée, le bord du collet 32 tourné vers le fond de la bouteille prenne appui sur le bord extrême du corps (ou sur l'anneau 3) et sur l'extrémité du levier 2.

Le creux défini dans le corps 1 est tronconique et présente un axe, ledit creux s'étendant entre deux extrémités, la surface de passage Si du creux perpendiculaire à son axe A-A à son extrémité adjacente du collet 32 du goulot introduit dans le creux étant inférieure à la surface de passage S2 du creux perpendiculaire à son axe à son autre extrémité.

L'axe A-A est légèrement incliné par rapport à un plan horizontal. Une telle inclinaison est par exemple de 1°.

Le levier articulé 2 présente deux parties 2A,2B, une première 2A étant agencée pour servir d'appui pour une partie du goulot tournée vers le fond de la bouteille, tandis que la deuxième partie 2B est agencée pour appuyer sur une partie de la face du goulot tournée vers le bas qui est adjacente du collet 32.

De préférence, le levier 2 est articulée par rapport à un axe sensiblement horizontal, tandis que la première partie 2A se trouve à une distance d de l'axe B-B supérieure à celle dl séparant la deuxième partie 2B dudit axe B-B.

En traits interrompus on a représenté un clapet mobile 40 sur lequel agit un moyen de rappel pour obturer une extrémité du creux lorsque le goulot d'une bouteille est retiré. Ce clapet est par exemple articulé sur l'anneau 3.

De façon avantageuse, le support comporte plusieurs corps 1, lesdits corps étant agencés les uns par rapport aux autres pour que les bouteilles bloquées par ceux-ci soient distantes les une des autres et de manière à ce que les bouteilles bloquées par ceux-ci puissent être retirées une à une sans toucher une autre bouteille.

La face arrière de la plaque 13 est avantageusement munie de collecteurs 50 pour récupérer tout fluide sortant des bouteilles et pour éviter que le fluide sortant d'une bouteille puisse couler sur le goulot d'une autre bouteille.

Pour le placement d'une bouteille, on assure une position sensiblement horizontale de la bouteille, voire une légère inclinaison du goulot vers le bas. Le goulot G est ainsi introduit dans le creux du corps. Une fois que le collet 32 de la bouteille a traversé le creux du corps, on pivote le fond de la bouteille vers le bas. Lors de ce mouvement, une partie du goulot prend appui sur le levier 2. Le poids P1 de la bouteille assure alors une poussée P2 du levier 2 au niveau du collet 32. Une poussée supplémentaire P3 au niveau du collet 32 est assurée par la lame ressort 25.

Pour retirer une bouteille, on soulève légèrement le fond de la bouteille pour agir sur le levier à l'encontre de la lame ressort 25 et pour amener les bourrelets 33,34 dans les évidements 15,16. Dans cette position le levier 2 est bloqué dans la rainure 14 et le goulot de la bouteille peut être retiré hors du creux, car le levier 2 n'est plus situé dans le volume du creux.

L'invention a également pour objet une armoire comportant un support suivant l'invention. Cette armoire 100 comporte deux parois 101 sensiblement verticales présentant des trous livrant passage à des dispositifs 102 suivant l'invention munis de clapet 40. Cette armoire 100 définit une chambre 103 destinée à recevoir les collets des bouteilles bloquées par les dispositifs ou les extrémités libres des goulots des bouteilles bloqués par les dispositifs. Lorsqu'un dispositif n'est pas utilisé pour le maintien d'une bouteille, le clapet 40 obture le passage du dispositif. La chambre 103 peut ainsi être isolée de l'atmosphère extérieure.
De préférence, cette chambre est associée à un moyen pour contrôler l'atmosphère, en particulier l'humidité, de la chambre. Ce moyen 104 permet par exemple une circulation ascendante d'air présentant une humidité contrôlée ou d'un gaz inerte, par exemple d'azote présentant une humidité contrôlée. De façon avantageuse, le moyen 104 permet également de contrôler la température de la chambre 103.
L'armoire 100 peut comporter un système de verrouillage, par exemple à clef, électronique, ..., des dispositifs pour empêcher le retrait ou le vol d'une bouteille.
L'armoire peut encore être munie de dispositifs de blocage associés à un système electrique destiné à envoyer un signal vers un dispositif de contrôle.
Si l'armoire n'est pas placée dans une cave, il peut être utile d'utiliser des câches pour la partie des bouteilles s'étendant à l'extérieur de la chambre 103. Ce câche 105 peut présenter une ouverture 106 pour permettre la lecture de l'étiquette. Ce câche est réalisé en une matière opaque, de sorte qu'il permet d'assurer que le contenu de la bouteille se trouve dans l'obscurité. Etant donné que les bouteilles sont sensiblement horizontale, il est avantageux de placer les étiquettes avec leur indication horizontale ou sensiblement horizontale pour permettre leur lecture sans devoir tourner ou enlever la bouteille.
L'invention a également pour objet un procédé de vieillissement de vin contenu dans des bouteilles, dans lequel on bloque les bouteilles au niveau de leur culot sur un support par exemple d'une armoire 100 pour assurer que les bouteilles ne se touchent pas entre elles, et pour assurer que l'axe des bouteilles forme un angle F de 1 à 15°, de préférence de 4 à 10° avec un plan horizontal, ledit angle étant tel que le point de croisement dudit axe avec le fond de la bouteille se trouve à un niveau inférieur au niveau de l'axe s'étendant dans le goulot.
De préférence, le fond des bouteilles et l'extrémité libre des goulots des bouteilles sont distantes des parois du local dans lequel on effectue le vieillissement du vin.
En particulier, on place les extrémités libres des goulots des bouteilles dans une chambre 103 sensiblement étanche créée dans le local et en ce qu'on contrôle l'humidité et/ou la température présente dans ladite chambre.

## Revendications

1. Dispositif de blocage pour une bouteille présentant un fond et un goulot (G) muni d'un collet (32), ce dispositif comprenant un corps (1) présentant une ouverture destinée à livrer passage à une partie du goulot (G) de la bouteille de sorte que ledit goulot (G) présente par rapport à ladite ouverture une face tournée vers le bas et une face tournée vers le haut, et une pièce mobile attachée audit corps et destinée à prendre appui au moins partiellement sur le goulot (G) de la bouteille, ladite ouverture présentant une face tournée vers le bas et une face tournée vers le haut, **caractérisé en ce que** la pièce mobile est une pièce (2) reliée à la face tournée vers le bas de l'ouverture dudit corps (1) par une articulation présentant un axe (B-B) sensiblement horizontal, ladite pièce (2) destinée à prendre appui sur la face tournée vers le bas du goulot présentant une première partie (2A) servant d'appui à une partie du goulot tournée vers le fond de la bouteille, et une deuxième partie (2B) servant d'appui à une partie du goulot adjacente du collet.

2. Dispositif suivant la revendication 1, **caractérisé en ce que** la deuxième partie (2B) a une extrémité agencée pour appuyer sur une partie du collet.

3. Dispositif suivant la revendication 1 ou 2, **caractérisé en ce que** la première partie (2A) se trouve à une distance de l'axe supérieure à celle séparant la deuxième partie dudit axe.

4. Dispositif suivant l'une quelconque des revendications précédentes, **caractérisé en ce qu'**un moyen (25) agit sur la pièce articulée (2) pour exercer sur celle-ci un effort tendant à la pousser sur une partie de la face du goulot tournée vers le bas. ladite partie du goulot étant de préférence adjacente du collet.

5. Dispositif suivant la revendication 4. **caractérisé en ce que** ledit moyen est une lame ressort (25).

6. Dispositif suivant la revendication 5, caractérisé en ce la pièce articulée (2) porte la lame ressort (25).

7. Dispositif suivant l'une quelconque des revendications précédentes, **caractérisé en ce qu'**il comporte un moyen (17,18) pour maintenir la pièce articulée (2) dans une position pour laquelle ladite pièce articulée (2) n'exerce pas d'effort sur le goulot, de préférence pour laquelle ledit moyen s'oppose à l'effort exercé par la lame ressort (25) sur la pièce articulée (2).

8. Dispositif suivant l'une des revendications précédentes, **caractérisé en ce qu'**il comporte un corps (1) présentant au moins une ouverture, ce corps étant agencé de manière à ce que la bouteille dont le goulot est engagé dans l'ouverture présente un axe sensiblement horizontal, de préférence formant un angle de 1 à 15° avec un plan horizontal, ledit angle étant tel que le point de croisement dudit axe avec le fond de la bouteille se trouve à un niveau inférieur au niveau de l'axe s'étendant dans le goulot.

9. Dispositif suivant la revendication 8, **caractérisé en ce que** l'angle que forme ledit axe avec un plan horizontal est compris entre 4 et 10°.

10. Dispositif suivant l'une quelconque des revendications précédentes, **caractérisé en ce que** l'ouverture est définie entre deux parois du corps, ladite ouverture étant agencée de manière à ce qu'au moins la face tournée vers le haut du goulot prenne appui sur une desdites parois définissant l'ouverture.

11. Dispositif suivant l'une quelconque des revendications précédentes, **caractérisé en ce que** l'ouverture est sensiblement cylindrique.

12. Dispositif suivant l'une quelconque des revendications précédentes, **caractérisé en ce que** l'ouverture est tronconique et présente un axe, ladite ouverture s'étendant entre deux extrémités, la surface de passage (S1) de l'ouverture perpendiculaire à son axe à son extrémité adjacente du collet du goulot introduit dans l'ouverture étant inférieure à la surface de passage (S2) de l'ouverture perpendiculaire à son axe à son autre extrémité.

13. Dispositif suivant la revendication 12, **caractérisé en ce que** l'axe de l'ouverture est inclinée par rapport à un plan horizontal.

14. Dispositif suivant l'une quelconque des revendications précédentes, **caractérisé en ce qu'**il se présente sous la forme d'un corps cylindrique creux destiné à être logé dans un trou que présente un support.

15. Dispositif suivant la revendication 14, **caractérisé en ce que** le corps présente un rebord (4) destiné à prendre appui sur une face du support.

16. Dispositif suivant la revendication 15, **caractérisé en ce que** le corps présente des moyens (28,29) destinés à coopérer avec un anneau (3) destiné à prendre appui sur la face du support opposée à la face sur laquelle prend appui le rebord (4).

17. Dispositif suivant l'une des revendications 14 à 16, **caractérisé en ce que** le corps présente une ou des pattes flexibles (11,12) munies d'un doigt (28,29) destiné à prendre appui sur une paroi du trou lors de l'engagement du corps dans ledit trou pour créer une flexion de ladite ou desdites pattes vers le creux du corps.

18. Dispositif suivant l'une quelconque des revendications précédentes, **caractérisé en ce qu'**il comporte un clapet mobile (40) sur lequel agit un moyen de rappel pour obturer l'ouverture lorsque le goulot d'une bouteille est retiré.

19. Dispositif suivant l'une quelconque des revendications précédentes, **caractérisé en ce qu'**il comporte un système de verrouillage permettant de bloquer la pièce articulée.

20. Plaque verticale présentant une série d'orifices recevant chacun un dispositif suivant l'une quelconque des revendications 1 à 19.

21. Armoire (100) comportant une plaque verticale présentant une série d'orifices recevant chacun un dispositif suivant l'une quelconque des revendications 1 à 19.

## Patentansprüche

1. Vorrichtung zum Befestigen für eine Flasche, die einen Boden und einen Hals (G) aufweist, der mit einem Kragen (32) ausgestattet ist, wobei diese Vorrichtung einen Körper (1) umfasst, der eine Öffnung aufweist, die dazu bestimmt ist, einen Teil des Flaschenhalses (G) durchzulassen, so dass der Hals (G) in Bezug auf die Öffnung eine nach unten gewandte Seite und eine nach oben gewandte Seite aufweist, und ein bewegliches Teil, das an dem Körper befestigt ist, und das dafür bestimmt ist, sich wenigstens teilweise auf den Flaschenhals (G) zu stützen, wobei die Öffnung eine nach unten gewandte Seite und eine nach oben gewandte Seite aufweist,
**dadurch gekennzeichnet, dass** das bewegliche Teil ein Teil (2) ist, das durch ein Gelenk, das eine im Wesentlichen horizontale Achse (B-B) aufweist, mit der nach unten gewandten Seite der Öffnung des Körpers (1) verbunden ist, wobei das Teil (2), das dafür bestimmt ist, sich auf die nach unten gewandte Seite des Halses zu stützen, einen ersten Teil (2A) aufweist, der als Halt für einen Teil des Halses dient, der nach unten auf den Boden der Flasche gewandt ist, und einen zweiten Teil (2B), der als Halt für einen Teil des Halses dient, der an den Kragen angrenzt.

2. Vorrichtung nach Anspruch 1, **dadurch gekennzeichnet, dass** der zweite Teil (2B) ein Ende hat, das so angeordnet ist, dass es auf einen Teil des Kragens drückt.

3. Vorrichtung nach Anspruch 1 oder 2, **dadurch gekennzeichnet, dass** sich der erste Teil (2A) auf einer größeren Distanz zu der Achse befindet, als die Distanz, die den zweiten Teil von der Achse trennt.

4. Vorrichtung nach einem der vorhergehenden Ansprüche, **dadurch gekennzeichnet, dass** ein Mittel (25) auf das mit einem Gelenk versehene Teil (2) einwirkt, um auf dieses einen Druck auszuüben, der darauf abzielt, es auf einen Teil der nach unten gewandten Seite des Halses zu drücken, wobei der Teil des Halses bevorzugterweise an den Kragen angrenzt.

5. Vorrichtung nach Anspruch 4, **dadurch gekennzeichnet, dass** das Mittel ein Federblatt (25) ist.

6. Vorrichtung nach Anspruch 5, dadurch gekennzeicnet, dass das auschwenkbare Teil (2) das Federblatt (25) trägt.

7. Vorrichtung nach einem der vorhergehenden Ansprüche, **dadurch gekennzeichnet, dass** sie ein Mittel (17, 18) umfasst, um das ausschwenkbare Teil (2) in einer Position zu halten, in der das ausschwenkbare Teil (2) keinen Druck auf den Hals ausübt, bevorzugterweise in der sich das Mittel sich dem Druck widersetzt, der durch das Federblatt (25) auf das ausschwenkbare Teil (2) ausgeübt wird.

8. Vorrichtung nach einem der vorhergehenden Ansprüche, **dadurch gekennzeichnet, dass** sie einen Körper (1) umfasst, der wenigstens eine Öffnung aufweist, wobei dieser Körper so angeordnet ist, dass die Flasche, deren Hals in die Öffnung eingeführt ist, eine im Wesentlichen horizontale Achse aufweist, vorzugsweise eine, die einen Winkel von 1 bis 15° mit einer horizontalen Ebene bildet, wobei der Winkel so ist, dass der Punkt, in dem die Achse den Boden der Flasche kreuzt, sich auf einer niedrigeren Ebene befindet als die Ebene der Achse, die sich im Hals erstreckt.

9. Vorrichtung nach Anspruch 8, **dadurch gekennzeichnet, dass** der Winkel, den die Achse mit einer horizontalen Ebene bildet, zwischen 4 und 10° liegt.

10. Vorrichtung nach einem der vorhergehenden Ansprüche, **dadurch gekennzeichnet, dass** die Öffnung von zwei Wänden des Körpers definiert ist, wobei die Öffnung so angebracht ist, dass sich wenigstens die nach oben gewandte Seite der Flasche auf eine der Wände stützt, die die Öffnung definieren.

11. Vorrichtung nach einem der vorhergehenden Ansprüche, **dadurch gekennzeichnet, dass** die Öffnung im Wesentlichen zylindrisch ist.

12. Vorrichtung nach einem der vorhergehenden Ansprüche, **dadurch gekennzeichnet, dass** die Öffnung kegelstumpfartig ist und eine Achse aufweist, wobei sich die Öffnung zwischen zwei Enden erstreckt und wobei die zu ihrer Achse orthogonal stehende Durchgangsfläche (S1) der Öffnung an ihrem dem Hals der in die Öffnung eingeführten Flasche benachbarten Ende kleiner ist als die zu ihrer Achse senkrecht stehende Durchgangsfläche (S2) der Öffnung an ihrem anderen Ende.

13. Vorrichtung nach Anspruch 12, **dadurch gekennzeichnet, dass** die Achse der Öffnung geneigt ist in Bezug auf eine horizontale Ebene.

14. Vorrichtung nach einem der vorhergehenden Ansprüche, **dadurch gekennzeichnet, dass** sie sich in Form eines zylindrischen Hohlkörpers ausgebildet ist, der dazu bestimmt ist, in einem Loch eingesetzt zu sein, das ein Träger aufweist.

15. Vorrichtung nach Anspruch 14, **dadurch gekennzeichnet, dass** der Körper eine Krempe (4) aufweist, die dafür bestimmt ist, sich auf eine Seite des Trägers zu stützen.

16. Vorrichtung nach Anspruch 15, **dadurch gekennzeichnet, dass** der Körper Mittel (28, 29) aufweist, die dazu bestimmt sind, mit einem Ring (3) zusammenzuarbeiten, der dazu bestimmt ist, sich auf die Seite des Trägers zu stützen, die der Seite gegenüberliegt, auf die sich die Krempe (4) stützt.

17. Vorrichtung nach einem der Ansprüche 14 bis 16, **dadurch gekennzeichnet, dass** der Körper eine oder mehrere elastische Halterungen (11, 12) umfasst, die mit einem Finger (28, 29) ausgestattet sind, der dazu bestimmt ist, sich gegen eine Wand des Lochs zu stützen, während der Körper in das Loch eingeführt wird, um eine Biegung der Halterung(en) in Richtung auf den Hohlraum des Körpers zu erzeugen.

18. Vorrichtung nach einem der vorhergehenden Ansprüche, **dadurch gekennzeichnet, dass** sie eine bewegliche Klappe (40) umfasst, auf die ein Rückholmittel einwirkt, um die Öffnung zu verschließen, während der Flaschenhals herausgenommen ist.

19. Vorrichtung nach einem der vorhergehenden Ansprüche, **dadurch gekennzeichnet, dass** sie ein Verschlusssystem umfasst, das es erlaubt, das ausschwenkbare Teil zu blockieren.

20. Vertikale Platte, die eine Reihe von Öffnungen aufweist, die jede eine Vorrichtung nach einem der Anspüche 1 bis 19 aufnimmt.

21. Aufbewahrungsort (100), der eine vertikale Platte umfasst, die eine Reihe von Öffnungen aufweist, von denen jede eine Vorrichtung nach einem der Ansprüche 1 bis 19 aufnimmt.

## Claims

1. A clamping device for a bottle having a bottom and a neck (G) provided with a collar (32), said device comprising a body (1) having an opening which is intended to allow a part of the bottleneck (G) to pass therethrough, so that, with respect to said opening, said neck has a downward face and an upward face, and a movable piece attached to said body and intended to rest at least partly on the neck (G) of the bottle, the said opening having a downward face and an upward face, **characterized in that** the movable piece is a piece (2) attached to the downward face of the opening of said body (1) by means of a hinge with a substantially horizontal axis (B-B), the said piece (2) intended to rest on the face of the neck directed towards the bottom having a first part (2A) acting as support to a part of the neck directed towards the bottom of the bottle, and a second part (2B) acting as support to a part of the neck adjacent to the collar.

2. Device according to claim 1, **characterized in that** the second part (2B) has an end adapted for resting on a part of the collar.

3. Device according to claim 1 or 2, **characterized in that** the first part (2A) is located at a distance from the axis which is greater than the distance between the second part and said axis.

4. Device according to any one of the preceding claims, **characterized in that** a means (25) acts on the hinged piece (2) to exert a force thereon aiming at pushing it against one part of the downward face of the neck, said part of the neck being preferably adjacent to the collar.

5. Device according to claim 4, **characterized in that** said means is a spring blade (25).

6. Device according to claim 5, **characterized in that** the hinged part (2) bears the spring blade (25).

7. Device according to any one of the preceding claims, **characterized in that** it includes a means (17,18) for keeping the hinged piece (2) in a position wherein said hinged piece (2) exerts no more force on the neck, preferably wherein said means opposes the force exerted by the spring blade (25) on the hinged piece (2).

8. Device according to any one of the preceding claims, **characterized in that** it includes a body having at least one opening, said body being adapted so that the bottle whose neck is engaged in the opening has a substantially horizontal axis, preferably forming an angle of 1° to 15° with a horizontal plane, said angle being such that the crossing point between said axis and the bottom of the bottle is at a level lower than the level of the axis which extends in the neck.

9. Device according to claim 8, **characterized in that** the angle formed by said axis and a horizontal plane is between 4° and 10°.

10. Device according to any one of the preceding claims, **characterized in that** the opening is defined between two walls of the body, said opening being designed in such a way that at least the upward face of the neck rests on one of said walls defining the opening.

11. Device according to any one of the preceding claims, **characterized in that** the opening is substantially cylindrical.

12. Device according to any one of the preceding claims, **characterized in that** the opening has a truncated cone shape and has an axis, said opening extending between two ends, the passage surface (S1) of the opening perpendicular to the axis thereof, at the end adjacent to the collar of the neck inserted in the opening being lower than the passage surface (S2) of the opening perpendicular to the axis thereof at the other end.

13. Device according to claim 12, **characterized in that** the axis of the opening is inclined with respect to a horizontal plane.

14. Device according to any one of the preceding claims, **characterized in that** it is in the form of a hollow cylindrical body, intended to be housed inside a hole formed in a support.

15. Device according to claim 14, **characterized in that** the body has a rim (4) which is intended to rest on a face of the support.

16. Device according to claim 15, **characterized in that** the body has means (28,29) for cooperating with a ring (3) which is intended to rest on the face of the support opposite to the face whereon the rim (4) rests.

17. Device according to any one of the claims 14 to 16, **characterized in that** the body has one or more flexible tongues (11,12) provided with a retaining tooth (28,29) which is intended to rest on a wall of the hole, upon engagement of the body in said hole, to cause said tongue(s) to bend towards the hollow of the body.

18. Device according to any one of the preceding claims, **characterized in that** it includes a movable valve (40), whereon a return means acts to close the opening when a bottleneck is taken out.

19. Device according to any one of the preceding claims, **characterized in that** it includes a locking mechanism allowing to lock the movable or hinged piece.

20. Vertical plate having several holes provided each with a device according to any one of the claims 1 to 19.

21. Cupboard (100) comprising a vertical plate several holes provided each with a device according to any one of the claims 1 to 19.
